# EUROPEAN PATENT APPLICATION

(11) **EP 3 236 353 A1**
(43) Date of publication of application: **25.10.2017**
(21) Application number: 15869007.3
(22) Date of filing: 02.07.2015
(51) Int. Cl.: G06F 9/445

(54) **COMBINED USE METHOD AND SYSTEM FOR VOI SYSTEM AND VDI SYSTEM**

(30) Priority: 19.12.2014 CN 201410796246
(71) Applicant: ZTE Corporation, Shenzhen, Guangdong 518057 (CN)
(72) Inventor: QIU, Haijun, Shenzhen Guangdong 518057 (CN); SHEN, Song, Shenzhen Guangdong 518057 (CN); LI, Kai, Shenzhen Guangdong 518057 (CN); SONG, Yimo, Shenzhen Guangdong 518057 (CN)
(74) Representative: Potter Clarkson LLP
(86) International application number: PCT/CN2015/083214
(87) International publication number: WO 2016/095495

(57) **Abstract**

Disclosed are a combined use method and system for a VOI system and a VDI system. The method comprises: creating a dynamic virtual hard disk (VHD) (11); storing an operating system mirror image into the VHD (12); installing a program at least containing a virtualised drive program, a virtual machine agent program and a hardware resource drive program of a terminal in the operating system mirror image in the VHD (13); and after installation is completed, performing data synchronisation processing on the VOI system and the VDI system (14). The VOI system and the VDI system are combined by means of the method above so as to form a system having the combined advantages of the two systems.

## Description

### TECHNICAL FIELD

The present disclosure relates to the field of communication technology, and more particularly, to a method and system for using a VOI system and a VDI system in an integrating manner (fusing the VOI system and the VDI system).

### BACKGROUND

In the current desktop virtualization technology, as the mainstream desktop virtualization technology, Virtual Desktop Infrastructure (VDI) and Virtual OS Infrastructure (VOI) have been used by vast vendors. Today, requirements for cloud computing technology increase day by day, and many manufacturers have launched their own related virtual desktop VDI or VOI products.

The VDI system and the VOI system have their own advantages. The VDI technology can make powerful hardware resources of a server for virtual use by using the virtualization technology, and assigns these resources to the corresponding virtual desktop users according to needs, to achieve the purpose of usage and management of the virtual machine. The VOI technology is to create a system image file on a server, each terminal machine uses a VOI server image through the network by using its own hardware resources, and VOI manages the terminal through the image and the network. As can be seen from the above, both technologies can achieve the purpose of data centralized management and information security control to the terminal users to a maximum extent. In addition, as a virtual disk format with more and more applications, applications of dynamic virtual disk files (Virtual Hard Disk format, VHD) are more and more wide, and many manufacturers have begun to apply it to multiple technical fields.

### SUMMARY

The technical problem to be solved by the embodiments of the disclosure is to provide a method and system for using a VOI system and a VDI system in an integrating manner, which can solve the problem that the current VOI system and VDI system are used separately and the separated usage cannot satisfy the demand of cloud computing technology well.

In order to solve the above technical problem, the embodiments of the present disclosure provide a method for using a VOI system and a VDI system in an integrating manner, including: creating a dynamic virtual disk VHD; storing an operating system image into the VHD; installing a program at least containing a virtualized driver, a virtual machine agent program, and a hardware resource driver of a terminal in the operating system image in the VHD; and after the installation is completed, performing a data synchronization processing on the VOI system and the VDI system.

The step of performing the data synchronization processing on the VOI system and the VDI system after the installation is completed includes: when information indicating that a same user logs in the VOI system and the VDI system respectively by different terminals is detected, respectively, performing a differential processing to obtain a sub VHD storing the operating system image, so that when the user is using the VOI system, disk data is operated in the VHD, and when the user is using the VDI system, the disk data is operated in the sub VHD.

The operating system image is installed with a synchronization process of the VOI system and the VDI system, and the step of performing the data synchronization processing on the VOI system and the VDI system after the installation is completed includes: when information indicating that a same user logs in the VOI system and the VDI system respectively at a preset time and by different terminals is detected, performing a data real-time synchronization on the VOI system and the VDI system through the synchronization process.

The operating system image is installed with a synchronization process of the VOI system and the VDI system, and the step of performing the data synchronization processing on the VOI system and the VDI system after the installation is completed includes: when information indicating that a same user logs in the VOI system and the VDI system respectively by different terminals and at different times is detected, performing a data timing synchronization on the VOI system and the VDI system through the synchronization process at a predetermined time; wherein a time interval between logging in the VDI system and logging in the VOI system is less than or equal to a preset time interval.

The step of performing the data timing synchronization on the VOI system and the VDI system through the synchronization process at the predetermined time includes: after both a terminal corresponding to the VOI system and a terminal corresponding to the VDI system have logged in the corresponding systems, performing a data timing synchronization on the VOI system and the VDI system through the synchronization process until a predetermined time before the terminal corresponding to the VOI system and/or the terminal corresponding to the VDI system is turned off.

The operating system image is installed with a server monitoring process and a synchronization process of the VOI system and the VDI system, wherein the step of performing the data synchronization processing on the VOI system and the VDI system after the installation is completed, includes: when it is detected that a time interval between a same user logs in the VOI system and the VDI system by different terminals is greater than the preset time interval, triggering the terminal corresponding to the VOI system to log in the VOI system or triggering the terminal corresponding to the VDI system to log in the VDI system through the server monitoring process, and performing the data timing synchronization on the VOI system and the VDI system through the synchronization process.

The step of detecting that the user logs in the VOI system and the VDI system includes: detecting a login user name and/or password information of the VOI system and the VDI system inputted by the user.

In order to solve the above technical problem, the embodiments of the present disclosure also provide a system for using a VOI system and a VDI system in an integrating manner, including: a creation module configured to create a dynamic virtual disk VHD; a storage module configured to store an operating system image in the dynamic virtual disk VHD; an installation module configured to install a program at least containing a virtualized driver, a virtual machine agent program, and a hardware resource driver of a terminal in the operating system image; and a processing module configured to, after the installation is completed, perform a data synchronization processing on the VOI system and the VDI system.

The processing module includes: a differential sub-module configured to, when information indicating that a same user logs in the VOI system and the VDI system respectively by different terminals is detected, perform a differential processing to obtain a sub VHD storing the operating system image, so that when the user is using the VOI system, disk data is operated in the VHD, and when the user is using the VDI system, the disk data is operated in the sub VHD.

The operating system image is installed with a synchronization process of the VOI system and the VDI system, wherein the processing module includes: a first synchronization sub-module configured to, when information indicating that a same user logs in the VOI system and the VDI system respectively at a preset time and by different terminals is detected, perform a data real-time synchronization on the VOI system and the VDI system through the synchronization process.

The operating system image is installed with a synchronization process of the VOI system and the VDI system, wherein the processing module includes: a second synchronization sub-module configured to, when information indicating that a same user logs in the VOI system and the VDI system respectively by different terminals and at different times is detected, perform a data timing synchronization on the VOI system and the VDI system through the synchronization process at a predetermined time; wherein a time interval between logging in the VDI system and logging in the VOI system is less than or equal to a preset time interval.

The second synchronization sub-module includes: a synchronization unit configured to, after both a terminal corresponding to the VOI system and a terminal corresponding to the VDI system have logged in the corresponding systems, perform a data timing synchronization on the VOI system and the VDI system through the synchronization process until a predetermined time before the terminal corresponding to the VOI system and/or the terminal corresponding to the VDI system is turned off.

The operating system image is installed with a synchronization process of the VOI system and the VDI system and a server monitoring process, wherein the processing module includes: a triggering sub-module configured to, when it is detected that a time interval between a same user logs in the VOI system and the VDI system by different terminals is greater than the preset time interval, trigger the terminal corresponding to the VOI system to log in the VOI system or trigger the terminal corresponding to the VDI system to log in the VDI system through the server monitoring process, and perform the data timing synchronization on the VOI system and the VDI system through the synchronization process.

The differential sub-module includes: a detection unit configured to detect a login user name and/or password information of the VOI system and the VDI system inputted by the user.

The advantageous effects of the above technical solutions of the embodiments of the present disclosure are as follows: the schemes of the embodiments of the present disclosure adopt VHD as a connection point to combine the VDI system and the VOI system efficiently, make the VOI system and the VDI system share one operating system image, and perform data synchronization on the combined VOI system and the VDI system through the synchronization process and the server monitoring process to ensure data uniqueness.

### BRIEF DESCRIPTION OF THE DRAWINGS

Fig. 1 shows a flow chart of a method for using a VOI system and a VDI system in an integrating manner according to an embodiment of the present disclosure;
Fig. 2 shows a first schematic diagram of a system for using a VOI system and a VDI system in an integrating manner according to an embodiment of the present disclosure;
Fig. 3 shows a second schematic diagram of a system for using a VOI system and a VDI system in an integrating manner according to an embodiment of the present disclosure;
Fig. 4 shows a third schematic diagram of a system for using a VOI system and a VDI system in an integrating manner according to an embodiment of the present disclosure;
Fig. 5 shows a fourth schematic diagram of a system for using a VOI system and a VDI system in an integrating manner according to an embodiment of the present disclosure;
Fig. 6 shows a fifth schematic diagram of a system for using a VOI system and a VDI system in an integrating manner according to an embodiment of the present disclosure;
Fig. 7 shows a sixth schematic diagram of a system for using a VOI system and a VDI system in an integrating manner according to an embodiment of the present disclosure;
Fig. 8 shows a seventh schematic diagram of a system for using a VOI system and a VDI system in an integrating manner according to an embodiment of the present disclosure; and
Fig. 9 shows a schematic diagram of an integration system formed by integrating the VOI system and the VDI system by using the above-described method and system in a specific example of the embodiments of the present disclosure.

### DETAILED DESCRIPTION

To make the technical problems to be solved, the technical solutions and the advantages of the embodiments of the present disclosure more clear, hereinafter, detailed explanations will be given with reference to the accompanying drawings and specific examples.

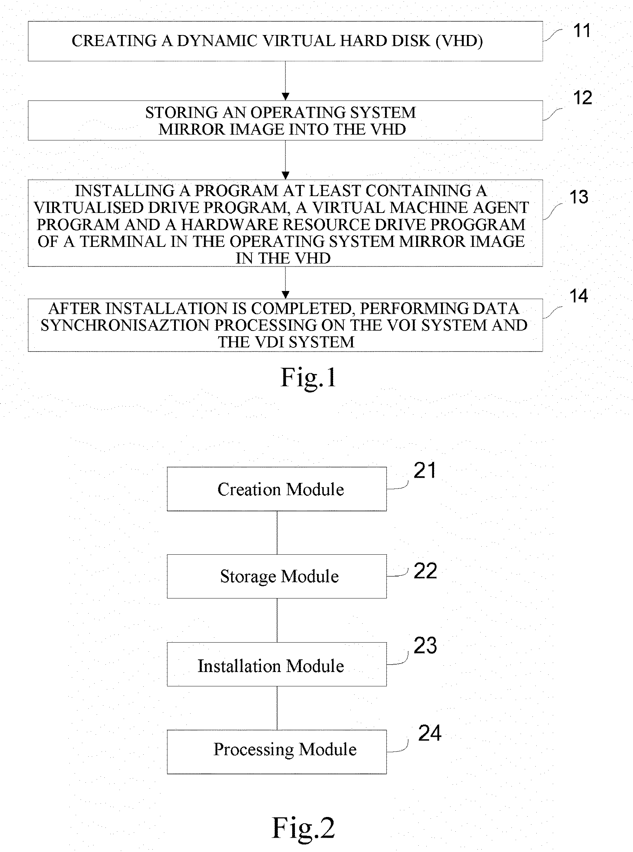

As shown in Fig. 1, a method for using a VOI system and a VDI system in an integrating manner according to an embodiment of the present disclosure includes the following steps.

In step 11, a dynamic virtual disk VHD is created.

In step 12, an operating system image is stored in the VHD.

In step 13, a program at least containing a virtualized driver, a virtual machine agent program, and a hardware resource driver of a terminal is installed in the operating system image in the VHD.

In step 14, after the installation is completed, a data synchronization processing is performed on the VOI system and the VDI system.

The core ideas for the above steps 11 through 14 include the following contents.
A, In the present integration system, it is needed to perform a docking association on VDI and VOI module subsystems by a user and a VHD file.
B, It is determined that the formats of the system images are all specified as dynamic VHD formats in the VDI and VOI integration system.
C, The disk image file of the virtual desktop in the integration system first needs to meet the installation requirement of the virtualized driver used by the VDI subsystem, and the hardware driver supporting multiple terminals used by the VOI subsystem previously.
D, When a same user has the VDI and VOI systems, the VDI uses the original VHD disk file, and when the VOI uses the disk file, a shadow image is generated by mirroring and synchronizing the VHD for being used by the VOI, and data filtering and synchronization are performed on the two operating system images through the data synchronization process.
E, For the user's data disk, the above scheme is also adopted for processing by using the VHD file as the data disk format and performing the data synchronization through the synchronization process in the image.

The above content A includes the following contents.

As two virtual desktop systems with distinct characteristics, the internal implementation manners of the VDI and VOI systems are not exactly the same due to their technical characteristics requirements. In order to achieve their high degree of convergence, they need to use their common points for effective connection. First, it is needed to share use of the operating system image, which can fundamentally achieve the integration, and the integration system will use the dynamic virtual disk VHD disk format. In addition, because of the mobile feature of the VDI desktop, the VDI generally uses the concept of a user name/password for login, that is, for any terminal at any location, as long as the network conditions permit, the cloud desktop system may be logged in and used by the user name/password. While for the VOI system, because of the strong correlation between the terminal and the image, many manufacturers do not use the user name as the login medium. In the integration system in the embodiments of the present disclosure, it is needed to introduce the concept of user name and password, to associate the VDI and VOI sub-modules. Specifically, a login user name/password is set for the VDI system, and a login user name/password is set for the VOI system, so that the VDI desktop or the VOI desktop may be selected and used by the user name/password.

The content B includes the following contents.

The dynamic VHD disk format has advantages of maintenance, loading, backup and migration convenience. In addition, as the greatest advantage, the dynamic VHD disk format has a small actual occupied space, and may increase the occupied space by itself according to increase of actual data. In addition, since the VHD format was proposed by Microsoft at the earliest, it can better adapt to the windows system. The above advantages give a better solution for the virtual desktop system, especially for the feature of high disk space requirements by the VDI desktop. In the integration system, the provision of a fixed and unique disk system is conducive to the follow-up highly integration between the VDI and the VOI, and especially lays a solid foundation for the integration of the operating system image disk files and the user data disk. That is, as to two different virtual desktops, i.e., VDI and VOI, for a same user, they use the same operating system image, and during the integration, this operating system image is stored in the VHD.

The above-mentioned content C specifically includes the following contents.

We know that for the VDI desktop, the hardware resources, such as a memory, a CPU, a hard drive and the like, are provided by a server, and the terminal user only needs to have the relevant client terminal to be connected to the server, then he/she may use a comprehensive operating system, without worrying about the hardware resources of the client terminal. This operating system needs to be connected with various network elements through a virtualized driver, a virtual machine agent and other programs, so the virtualized driver, the virtual machine agent and other programs should be installed in the operating system image. For the VOI desktop, the terminal user applies the operating system image to the terminal, and the hardware resources of the terminal are used, so the related hardware resource driver of the terminal should be installed in the operating system image. All of the above contents require that the virtual machine image file of the integration system needs to include the above related programs, such that it may be used by the terminal user normally. In particular, the installation of such programs can be solved by one installation package installed in the operating system image.

The above-mentioned content D specifically includes the following contents.

When a certain user uses the VDI virtual desktop and the VOI virtual desktop respectively in two different terminals, because the operating systems used by the two desktop are the same image, there is a problem of how to ensure the data uniqueness when operating the same image, that is, how to guarantee synchronization of data in the two systems when a same user uses the VOI system and the VDI system by different terminals.

First, it should be noted that the VHD disk may be used directly by the VDI system, and when the VOI system is in preparation for using the operating system image, it is necessary to obtain a sub VHD by a differential processing, the content of the sub VHD is equivalent to the VHD content of the VDI, and the entire operations on the disk data by the VOI system are performed in this differential sub VHD.

Hereinafter, for three conditions, the step of performing a data synchronization processing on the VOI system and the VDI system is illustrated.
(1) The operating system image is installed with a synchronization process of the VOI system and the VDI system. When it is detected that a same user logs in the VOI system and the VDI system at a preset time and by different terminals, respectively, the server performs a data real-time synchronization on the VOI system and the VDI system through the synchronization process.
(2) The operating system image is installed with the synchronization process of the VOI system and the VDI system. When information indicating that a same user logs in the VOI system and the VDI system respectively by different terminals and at different times is detected, the server performs a data timing synchronization on the VOI system and the VDI system through the synchronization process at a predetermined time; wherein a time interval between logging in the VDI system and logging in the VOI system is less than or equal to a preset time interval. The step of performing the data timing synchronization on the VOI system and the VDI system through the synchronization process at the predetermined time includes: after both a terminal corresponding to the VOI system and a terminal corresponding to the VDI system have logged in the corresponding systems, performing a data timing synchronization on the VOI system and the VDI system through the synchronization process until a predetermined time before the terminal corresponding to the VOI system and/or the terminal corresponding to the VDI system is turned off.
(3) The operating system image is installed with a server monitoring process and a synchronization process of the VOI system and the VDI system. When it is detected that a time interval between a same user logging in the VOI system and the VDI system by different terminals is greater than the preset time interval, the terminal corresponding to the VOI system is triggered to log in the VOI system or the terminal corresponding to the VDI system is triggered to log in the VDI system through the server monitoring process, and the data timing synchronization is performed on the VOI system and the VDI system through the synchronization process.

Generally, it is not recommended to use one VHD image file by a number of users. If there is a customization requirement, the integration system provides the following solution: differential imaging (mirroring) is performed on the VHD image file for different users, that is, how many users use this VHD image file, how many sub VHD image files are obtained by the differential processing. Due to difference of users, considering safety of the users, it is not necessary to synchronize the data of the sub VHD image files.

The above-mentioned content E specifically includes the following contents.

With respect to the requirement for the data disk generated by data such as stored files and personal information of the user, it is also possible to use the VHD as the disk format of the data disk. Because the data disk cannot be presented to the user alone, it is possible to use the synchronization process of the client terminal in the user virtual desktop operating system, to synchronize the implementation of the data.

In summary, the VOI system and the VDI system are integrated using the scheme of the embodiments of the present disclosure, so that a more comprehensive and excellent system incorporating the advantages of both systems can be formed.

As shown in Fig. 2, an embodiment of the present disclosure also provides a system for using a VOI system and a VDI system in a integrating manner, including: a creation module 21, a storage module 22, an installation module 23, and a processing module 24.

The creation module 21 is configured to create a dynamic virtual disk VHD.

The storage module 22 is configured to store an operating system image in the dynamic virtual disk VHD.

The installation module 23 is configured to install a program at least containing a virtualized driver, a virtual machine agent program, and a hardware resource driver of a terminal in the operating system image.

The processing module 24 is configured to perform data synchronization processing on the VOI system and the VDI system after the installation is completed.

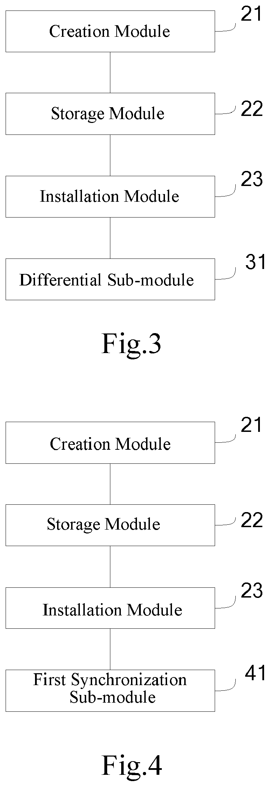

As shown in Fig. 3, the processing module 24 includes: a differential sub-module 31.

The differential sub-module 31 is configured to, when information indicating that a same user logs in the VOI system and the VDI system respectively by different terminals is detected, perform a differential processing to obtain a sub VHD storing the operating system image, so that when the user is using the VOI system, disk data is operated in the VHD, and when the user is using the VDI system, the disk data is operated in the sub VHD.

The operating system image is installed with a synchronization process of the VOI system and the VDI system. As shown in Fig. 4, the processing module 24 includes: a first synchronization sub-module 41.

The first synchronization sub-module 41 is configured to, when information indicating that a same user logs in the VOI system and the VDI system respectively at a preset time and by different terminals is detected, perform a data real-time synchronization on the VOI system and the VDI system through the synchronization process.

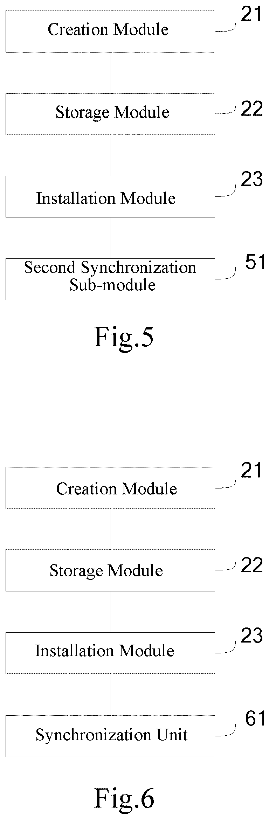

The operating system image is installed with a synchronization process of the VOI system and the VDI system. As shown in Fig. 5, the processing module 24 includes: a second synchronization sub-module 51.

The second synchronization sub-module 51 is configured to, when information indicating that a same user logs in the VOI system and the VDI system respectively by different terminals and at different times is detected, perform a data timing synchronization on the VOI system and the VDI system through the synchronization process at a predetermined time; wherein a time interval between logging in the VDI system and logging in the VOI system is less than or equal to a preset time interval.

As shown in Fig. 6, the second synchronization sub-module 51 includes: a synchronization unit 61.

The synchronization unit 61 is configured to, after both a terminal corresponding to the VOI system and a terminal corresponding to the VDI system have logged in the corresponding systems, perform a data timing synchronization on the VOI system and the VDI system through the synchronization process until a predetermined time before the terminal corresponding to the VOI system and/or the terminal corresponding to the VDI system is turned off.

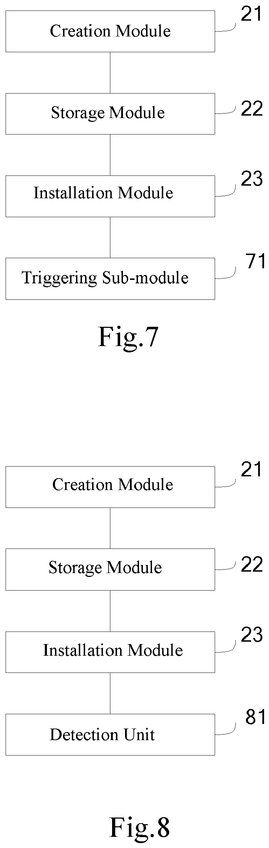

The operating system image is installed with a synchronization process of the VOI system and the VDI system and a server monitoring process. As shown in Fig. 7, the processing module 24 includes: a triggering sub-module 71.

The triggering sub-module 71 is configured to, when it is detected that a time interval at which a same user logs in the VOI system and the VDI system by different terminals is greater than the preset time interval, trigger the terminal corresponding to the VOI system to log in the VOI system or trigger the terminal corresponding to the VDI system to log in the VDI system through the server monitoring process, and perform the data timing synchronization on the VOI system and the VDI system through the synchronization process.

As shown in Fig. 8, the differential sub-module 31 includes: a detection unit 81.

The detection unit 81 is configured to detect a login user name and/or password information of the VOI system and the VDI system inputted by the user.

It is to be noted that the system is a system including the above-described method, and the implementation manners of the embodiments of the above-described method are applicable to the embodiments of the system, and can achieve the same technical effect.

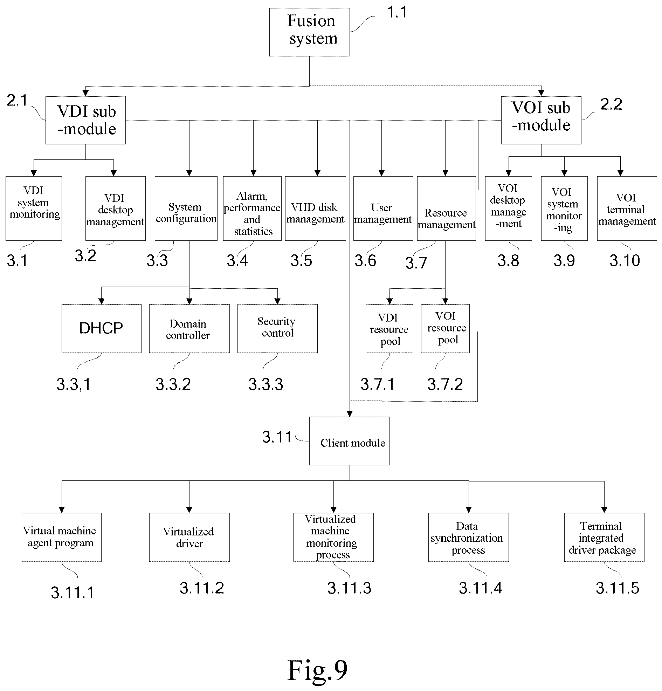

Using the above-described method and system, the VOI system and the VDI system are integrated to form an integration system. In a specific embodiment of the present disclosure, the integration system is shown in Fig. 9. Hereinafter, each of the modules in the integration system is described in detail.
Module 1.1: this module is a root system of the integration; and from the view of function, this module is divided into a VDI sub-module (VDI system) and a VOI sub-module (VOI system).
Module 2.1: this module is the VDI sub-module, is responsible for rendering a VDI virtual cloud desktop function, and provides a virtual machine operating system of VDI technology characteristics, the hardware resources are managed and distributed for being used by the virtual machine and safety supervision is performed on the virtual machine via a server, and the user is connected to the virtual machine operating system via the terminal for use.
Module 2.2: VOI sub-module, this module is responsible for rendering the function of the VOI virtual cloud desktop and provides the virtual machine operating system image of the VOI technology characteristics. The user connects to the server through the terminal network and pulls the operating system image to the local for actual use. The operating system uses the hardware resources on the terminal.
Module 3.1: VDI system monitoring module, this module mainly provides data monitoring and management, security control, remote assistance and other functions for the VDI sub-module.
Module 3.2: VDI desktop management module, this module mainly provides specific creation, distribution, deletion, start, restart, close of the VDI virtual machine desktop; and policy development, modification of the virtual machine desktop and so on for the VDI sub-module.
Module 3.3: system configuration module, this module mainly provides specific system configuration for the integration system, such as dhcp server configuration used by the VOI system, the domain control server configuration used by the integration system, and security configuration used by the integration system.
Module 3.4: Alarm, performance and statistics module, this module mainly provides system alarms, performance data, server and user data statistics functions for the integration system.
Module 3.5: VHD disk management module, this module mainly provides magnetic matrix server configuration, VHD disk image creation, management and other functions for the integration system, and after this module is configured successfully, it can provide the most basic disk image support for the VDI or VOI function module.
Module 3.6: user management module, this module mainly provides user management functions for the integration system, including creation, modification and deletion of users involved in VDI and VOI; user group management; and user policy management.
Module 3.7: resource management module, this module mainly provides server resource management for the integration system, performs centralized control and resource scheduling on the VDI and VOI servers, and is mainly divided into a VDI resource pool and a VOI resource pool.
Module 3.8: VOI desktop management module, this module mainly provides a specific creation, distribution, deletion, start, restart, close and so on of the VOI virtual machine desktop for the VOI sub-module.
Module 3.9: VOI system monitoring module, this module mainly provides data monitoring and management, security control, remote assistance and other functions for the VOI sub-module.
Module 3.10: VOI system terminal management module, this module mainly provides the relevant addition, modification, deletion and other functions of all the terminals for the VOI sub-module.
Module 3.11: client module, this module mainly provides the virtualized driver, virtual machine agent, terminal hardware driver, monitor program and data synchronization program used by the VDI system for the integration system.
Module 3.3.1: DHCP management module, this module mainly provides DHCP server configuration and management, and a relay server management function for the integration system, and provides a DHCP service for the system.
Module 3.3.2: domain controller management module, this module mainly provides a connection configuration of a domain control server for the integration system, and provides a domain control authentication manner for the user authentication.
Module 3.3.3: security control management module, this module mainly provides information security level configuration (including configuration of various hardware and software rights such as USB rights, network privileges, etc.) for the integration system.
Module 3.7.1: VDI resource pool module, this module mainly provides the integrated management function of VDI server for the integration system. In this resource pool, the manage configuration and resource scheduling of various servers, such as all host servers, and virtual machine management servers of VDI may be systematically managed.
Module 3.7.2: VOI resource pool module, this module mainly provides the integrated management function of the VOI server for the integration system. In this resource pool, the manage configuration and resource scheduling of various servers, such as all authentication servers, and data servers of VOI may be systematically managed.
Module 3.11.1: virtual machine agent module, this module mainly provides a process module used when the virtual machine desktop operating system and the VDI system server are interacted, to communicate various information of the virtual machine to the host machine.
Module 3.11.2: virtualization driver module, this module mainly provides the relevant driver installation support, an interaction with server virtualization layer message and other functions for the VDI virtual machine desktop operating system.
Module 3.11.3: virtualization monitoring process module, this module mainly provides functions of providing heartbeat message interaction, alarm message delivery, monitoring client process and so on for the operating system.
Module 3.11.4: data synchronization process module, this module mainly provides data synchronization, data filtering detection and other functions for the VDI and VOI virtual desktops.
Module 3.11.5: terminal integrated driver module, this module mainly provides driver installation services for all terminal hardware drivers of the VOI system, to ensure that the operating system can adapt to the operating system.

In summary, the integration system can avoid shortcomings of the VDI and VOI technologies to a maximum extent. The most important feature lies in that it can provide customers with better use experience of the user virtual desktop of all-round, full-time, and multi-terminal. Today, the cloud computing technology is increasingly and widely used, and the integration system will have a great application space.

The foregoing is embodiments of the present disclosure and it should be noted that it will be apparent to those skilled in the art that a number of improvements and modifications may be made without departing from the principles of the present disclosure, such improvements and modifications should be regarded as the protection scope of the present disclosure.

### Industrial Applicability

As described above, in the above-described embodiments and preferred embodiments, the VHD is used as a connection point, and then the VDI system and the VOI system are efficiently merged, the VOI system and the VDI system share one operating system image, and data synchronizing is performed on the merged VOI system and the VDI system by the synchronizing process and the server monitoring process to ensure data uniqueness.

## Claims

1. A method for using a VOI system and a VDI system in an integrating manner, comprising:
creating a dynamic virtual disk VHD;
storing an operating system image into the VHD;
installing a program at least containing a virtualized driver, a virtual machine agent program, and a hardware resource driver of a terminal in the operating system image in the VHD; and
after the installation is completed, performing a data synchronization processing on the VOI system and the VDI system.

2. The method according to claim 1, wherein the step of performing the data synchronization processing on the VOI system and the VDI system after the installation is completed comprises:
when information indicating that a same user logs in the VOI system and the VDI system respectively by different terminals is detected, performing a differential processing to obtain a sub VHD storing the operating system image, so that when the user is using the VOI system, disk data is operated in the VHD, and when the user is using the VDI system, the disk data is operated in the sub VHD.

3. The method according to claim 2, wherein the operating system image is installed with a synchronization process of the VOI system and the VDI system, and the step of performing the data synchronization processing on the VOI system and the VDI system after the installation is completed comprises:
when information indicating that a same user logs in the VOI system and the VDI system respectively at a preset time and by different terminals is detected, performing a data real-time synchronization on the VOI system and the VDI system through the synchronization process.

4. The method according to claim 2, wherein the operating system image is installed with a synchronization process of the VOI system and the VDI system, and the step of performing the data synchronization processing on the VOI system and the VDI system after the installation is completed comprises:
when information indicating that a same user logs in the VOI system and the VDI system respectively by different terminals and at different times is detected, performing a data timing synchronization on the VOI system and the VDI system through the synchronization process at a predetermined time; wherein a time interval between logging in the VDI system and logging in the VOI system is less than or equal to a preset time interval.

5. The method according to claim 4, wherein the step of performing the data timing synchronization on the VOI system and the VDI system through the synchronization process at the predetermined time comprises:
after both a terminal corresponding to the VOI system and a terminal corresponding to the VDI system have logged in the corresponding systems, performing a data timing synchronization on the VOI system and the VDI system through the synchronization process until a predetermined time before the terminal corresponding to the VOI system and/or the terminal corresponding to the VDI system is turned off.

6. The method according to claim 4, wherein the operating system image is installed with a server monitoring process and a synchronization process of the VOI system and the VDI system, wherein the step of performing the data synchronization processing on the VOI system and the VDI system after the installation is completed, comprises:
when it is detected that a time interval between a same user logs in the VOI system and the VDI system by different terminals is greater than the preset time interval, triggering the terminal corresponding to the VOI system to log in the VOI system or triggering the terminal corresponding to the VDI system to log in the VDI system through the server monitoring process, and performing the data timing synchronization on the VOI system and the VDI system through the synchronization process.

7. The method according to claim 2, wherein the step of detecting that the user logs in the VOI system and the VDI system comprises:
detecting a login user name and/or password information of the VOI system and the VDI system inputted by the user.

8. A system for using a VOI system and a VDI system in an integrating manner, comprising:
a creation module configured to create a dynamic virtual disk VHD;
a storage module configured to store an operating system image in the dynamic virtual disk VHD;
an installation module configured to install a program at least containing a virtualized driver, a virtual machine agent program, and a hardware resource driver of a terminal in the operating system image; and
a processing module configured to, after the installation is completed, perform a data synchronization processing on the VOI system and the VDI system.

9. The system according to claim 8, wherein the processing module comprises:
a differential sub-module configured to, when information indicating that a same user logs in the VOI system and the VDI system respectively by different terminals is detected, perform a differential processing to obtain a sub VHD storing the operating system image, so that when the user is using the VOI system, disk data is operated in the VHD, and when the user is using the VDI system, the disk data is operated in the sub VHD.

10. The system according to claim 9, wherein the operating system image is installed with a synchronization process of the VOI system and the VDI system, wherein the processing module comprises:
a first synchronization sub-module configured to, when information indicating that a same user logs in the VOI system and the VDI system respectively at a preset time and by different terminals is detected, perform a data real-time synchronization on the VOI system and the VDI system through the synchronization process.

11. The system of claim 9, wherein the operating system image is installed with a synchronization process of the VOI system and the VDI system, wherein the processing module comprises:
a second synchronization sub-module configured to, when information indicating that a same user logs in the VOI system and the VDI system respectively by different terminals and at different times is detected, perform a data timing synchronization on the VOI system and the VDI system through the synchronization process at a predetermined time; wherein a time interval between logging in the VDI system and logging in the VOI system is less than or equal to a preset time interval.

12. The system according to claim 11, wherein the second synchronization sub-module comprises:
a synchronization unit configured to, after both a terminal corresponding to the VOI system and a terminal corresponding to the VDI system have logged in the corresponding systems, perform a data timing synchronization on the VOI system and the VDI system through the synchronization process until a predetermined time before the terminal corresponding to the VOI system and/or the terminal corresponding to the VDI system is turned off.

13. The system according to claim 11, wherein the operating system image is installed with a synchronization process of the VOI system and the VDI system and a server monitoring process, wherein the processing module comprises: a triggering sub-module configured to, when it is detected that a time interval between a same user logs in the VOI system and the VDI system by different terminals is greater than the preset time interval, trigger the terminal corresponding to the VOI system to log in the VOI system or trigger the terminal corresponding to the VDI system to log in the VDI system through the server monitoring process, and perform the data timing synchronization on the VOI system and the VDI system through the synchronization process.

14. The system according to claim 9, wherein the differential sub-module comprises:
a detection unit configured to detect a login user name and/or password information of the VOI system and the VDI system inputted by the user.
